# EUROPÄISCHE PATENTSCHRIFT

(11) **EP 0 913 601 B1**
(45) Veröffentlichungstag und Bekanntmachung des Hinweises auf die Patenterteilung: **04.12.2002**
(21) Anmeldenummer: 98117546.6
(22) Anmeldetag: 16.09.1998
(51) Int. Cl.: F16H 41/24, B60K 1/00

(54) **Anbindung für einen Drehmomentwandler**
Connection for a hydrokinetic torque converter
Connexion pour un convertisseur de couple hydrodynamique

(30) Priorität: 30.10.1997 DE 19747964
(43) Veröffentlichungstag der Anmeldung: 06.05.1999
(73) Patentinhaber: Bayerische Motoren Werke Aktiengesellschaft, 80788 München (DE)
(72) Erfinder: Winkam, Gamjad, 85406 Zolling (DE)

(56) Entgegenhaltungen:
- DE-A- 4 122 135
- US-A- 3 845 622
- US-A- 4 056 019
- US-A- 4 129 050
- US-A- 4 407 398

## Beschreibung

Die Erfindung betrifft eine Antriebsverbindung zur Drehmomentübertragung im Antriebsstrang eines Kraftfahrzeugs gemäß dem Oberbegriff des Patentanspruches 1.

Aus der DE 41 22 135 A1 ist ein Antriebsstrang eines Kraftfahrzeugs bekannt, bei dem die Kurbelwelle über eine mit einer Längsverzahnung versehene Welle-Nabe-Verbindung mit einem Pumpenrad eines hydrodynamischen Drehmomentwandlers verbunden ist. Das Pumpenrad ist über ein Zylinderrollenlager im Getriebegehäuse gelagert.

Des weiteren ist aus der gattungsgemäßen US 44 07 398 ein Antriebsstrang bekannt, bei dem die Kurbelwelle mit einem hydrodynamischen Drehmomentwandler verbunden ist, dessen Pumpenrad zusätzlich als Rotor einer motorisch bzw. generatorisch betreibbaren elektrischen Maschine fungiert.

Ferner ist bekannt, einen Drehmomentwandler über eine Mitnehmerscheibe mit einer Kurbelwelle zu verbinden. Die DE 195 22 869 A1 beschreibt eine solche Anordnung, bei der das Pumpenrad des Drehmomentwandlers in der Kurbelwelle in radialer Richtung zentriert wird. Durch diese Art der Zentrierung des Drehmomentwandlers ist die Montage nur auf schwierige und aufwendige Weise möglich, indem die Verbindung durch die Mitnehmerscheibe nach dem Ineinanderschieben von Kurbelwelle und Drehmomentwandler hergestellt wird.

### [Aufgabe der Erfindung]

Deshalb ist es Aufgabe der Erfindung, eine lösbare Verbindung zwischen einem Drehmomentwandler und einer Kurbelwelle bereitzustellen, bei der der Drehmomentwandler in radialer Richtung unabhängig von der Kurbelwelle festgelegt ist und die Montage einer durch das Pumpenrad angetriebenen elektrischen Maschine Vereinfacht wird.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist eine Antriebsverbindung zur Drehmomentübertragung im Antriebsstrang eines Kraftfahrzeugs für lösbares Verbinden einer Kurbelwelle mit einem Pumpenrad eines gleichachsig angeordneten hydrodynamischen Drehmomentwandlers vorgesehen, bei der das Pumpenrad über ein Radiallager getriebegehäusefest abgestützt, drehbar gelagert ist.

Das hat den Vorteil, daß das Pumpenrad durch die Abstützung über das Radiallager zentriert wird, und deshalb keine Zentrierverbindung zur Kurbelwelle notwendig ist, was die Montage vereinfacht.

Bei einer bevorzugten Ausführung der Erfindung hat das Verbinden von Pumpenrad und Kurbelwelle über eine mit Längsverzahnungen versehene Wellen-Nabenverbindung den Vorteil, daß die Drehmomentwandleranbindung noch einfacher montiert werden kann. Dazu brauchen Kurbelwelle und Drehmomentwandler nur in axialer Richtung so zusammengeschoben werden, daß die Längsverzahnungen von Welle und Nabe ineinander ragen.

Außerdem werden durch die Längsverzahnung Axial- und Radialtoleranzen ausgeglichen.

An dem Pumpenrad ist ein Rotor einer elektrischen Maschine ausgebildet. So kann dieses bei seiner Drehung als elektrische Maschine arbeiten, zusammen mit einem am Getriebegehäuse angebrachten Stator. Dabei kann ein Betrieb der elektrischen Maschine sowohl als Motor, als auch als Generator vorgesehen werden. Beim Motorbetrieb ist insbesondere auch eine Betriebsart als Startermotor für die Brennkraftmaschine möglich.

Bei einer weiteren vorteilhaften Ausführung der Erfindung ist vorgesehen, daß der Rotor mit dem Pumpenrad formschlüssig verbunden oder einstückig ausgebildet ist und daß der Rotor über das Radiallager getriebegehäusefest, drehbar gelagert ist und das Pumpenrad abstützt.

Das hat den Vorteil, daß der Luftspalt zwischen Rotor und Stator sehr klein gewählt werden kann, unabhängig von den Toleranzen der Flucht von Kurbelwelle und Pumpenrad, was den Wirkungsgrad der elektrischen Maschine verbessert.

Die Erfindung sieht weiterhin vor, daß das Radiallager in einem Gehäuse der elektrischen Maschine angebracht ist, das am Getriebegehäuse befestigt ist.

Das hat den Vorteil, daß die elektrische Maschine eine abgeschlossene Einheit ist, die leicht und unabhängig vom Drehmomentwandler montiert werden kann.

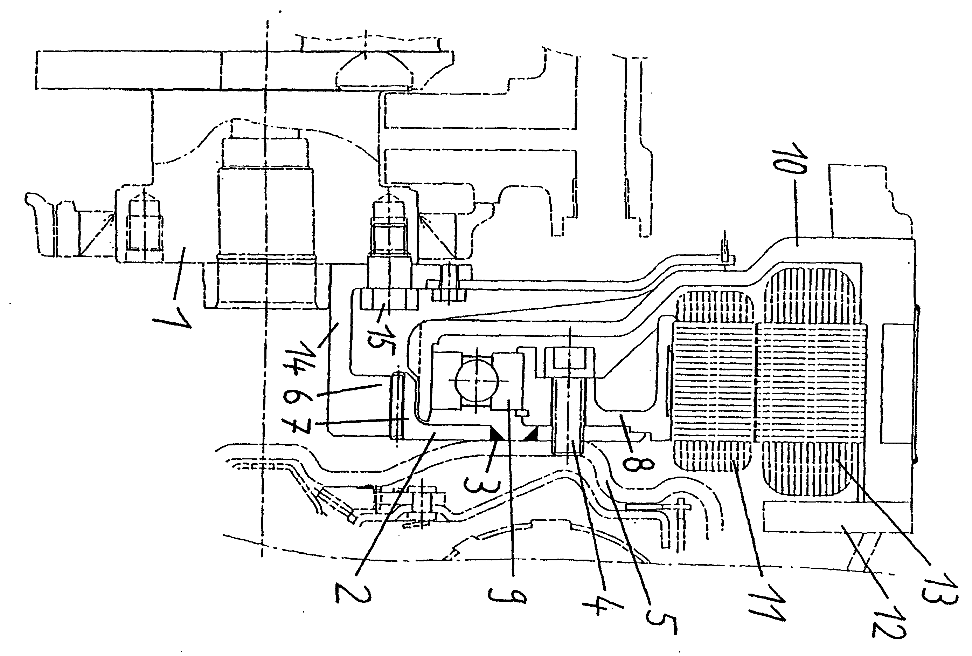

Ein bevorzugtes Ausführungsbeispiel der Erfindung beschreibt die nachfolgende Beschreibung mit der zugehörigen Zeichnung. Die einzige Figur zeigt:

### [Beispiele]

Die Anbindung eines Pumpenrades eines hydrodynamischen Drehmomentwandlers mit Starter/Generatoreinheit an eine Kurbelwelle über eine Längsverzahnung in einem Teilschnitt.

An einem Endabschnitt einer Kurbelwelle 1 ist durch Schrauben 15 ein Abtriebsflansch 14 angebracht, der zu seiner Verbindung mit einem Pumpenrad 5 eines teilweise gezeichneten hydrodynamischen Drehmomentwandlers an der Anbindungsstelle als längsverzahnte Welle 6 ausgebildet ist. Diese ist in einen als längsverzahnte Nabe 7 ausgebildeten Antriebsflansch 2 des hydrodynamischen Drehmomentwandlers eingeschoben. Der Antriebsflansch 2 ist durch eine Schweißnaht 3 fest mit dem Pumpenrad 5 des Drehmomentwandlers verbunden.

Die Längsverzahnungen der Wellen-Nabenverbindung 6,7 übertragen das Drehmoment von der Kurbelwelle 1 zum Drehmomentwandler.

Zusätzlich sind am Pumpenrad 5 noch Rotorwicklungen 11 angebracht, damit dieses bei seiner Drehung als elektrische Maschine arbeitet, zusammen mit an einem Getriebegehäuse 12 angebrachten Statorwicklungen 13. Dabei ist ein Betrieb der elektrischen Maschine sowohl als Motor, als auch als Generator möglich. Beim Motorbetrieb ist insbesondere auch eine Betriebsart als Startermotor für die Brennkraftmaschine vorgesehen. Die Rotorwicklungen 11 sind mit dem Pumpenrad 5 über einen durch Schrauben 4 an diesem befestigten Rotor 8 verbunden.

Zur Festlegung des hydrodynamischen Drehmomentwandlers in radialer Richtung ist der Rotor 8 über ein Radiallager 9 in einem Gehäuse 10 der elektrischen Maschine gelagert, das mit dem Getriebegehäuse 12 verbunden ist.

Zur Montage der Drehmomentwandleranbindung an die Kurbelwelle 1 wird der Rotor 8 der elektrischen Maschine mit den Schrauben 4 am Pumpenrad 5 befestigt, während das Gehäuse 10 der elektrischen Maschine an dem Getriebegehäuse 12 angebracht wird. Dann werden Kurbelwelle 1 und Drehmomentwandler in axialer Richtung so zusammengeschoben, daß die Längsverzahnungen von Welle 6 und Nabe 7 ineinander ragen.

## Patentansprüche

1. Antriebsverbindung zur Drehmomentübertragung im Antriebsstrang eines Kraftfahrzeugs, für lösbares Verbinden einer Kurbelwelle (1) mit einem Pumpenrad (5) eines gleichachsig angeordneten hydrodynamischen Drehmomentwandlers wobei an dem Pumpenrad (5) ein Rotor (8) einer elektrischen Maschine ausgebildet ist,
**dadurch gekennzeichnet, dass** das Pumpenrad (5) über ein Radiallager (9) getriebegehäusefest abgestützt, drehbar gelagert ist und dass das Radiallager (9) in einem Gehäuse (10) der elektrischen Maschine angebracht ist, das am Getriebegehäuse (12) befestigt ist.

2. Antriebsverbindung nach Anspruch 1,
**dadurch gekennzeichnet, dass** die Verbindung zwischen Pumpenrad (5) und Kurbelwelle (1) eine mit Längsverzahnungen versehene Wellen-Nabe-Verbindung ist.

3. Antriebsverbindung nach Anspruch 1 oder 2,
**dadurch gekennzeichnet, dass** die elektrische Maschine sowohl als Motor, als auch als Generator betrieben werden kann.

4. Antriebsverbindung nach einem der Ansprüche 1 bis 3,
**dadurch gekennzeichnet, dass** der Rotor (8) mit dem Pumpenrad (5) formschlüssig verbunden oder einstückig ausgebildet ist und dass der Rotor (8) über das Radiallager (9) getriebegehäusefest abgestützt, drehbar gelagert ist.

## Claims

1. A drive connection for transmitting torque in the line of drive shafts of a motor vehicle, in order releasably to connect a crankshaft (1) to a pump impeller (5) of a coaxially disposed hydrodynamic torque converter, wherein a rotor (8) of an electric machine is formed on the pump impeller (5),
**characterised in that** the pump impeller (5) is rotatably mounted and non-displaceably secured to the gearbox by a radial ball bearing (9) and the radial ball bearing (9) is disposed in a casing (10) of the electric machine, the casing being fastened to the gearbox (12).

2. A drive connection according to claim 1,
**characterised in that** the connection between the impeller wheel (5) and the crankshaft (1) is a longitudinally toothed shaft and hub connection.

3. A drive connection according to claim 1 or claim 2,
**characterised in that** the electric machine can operate either as a motor or as a generator.

4. A drive connection according to any of claims 1 to 3,
**characterised in that** the rotor (8) is positively connected to or in one piece with the pump impeller (5), and the rotor (8) is rotatably mounted and is non-displaceably supported on the gearbox by the radial ball bearing (9).

## Revendications

1. Liaison d'entraînement pour transmettre un couple de rotation dans la barre de transmission d'un véhicule automobile pour une liaison amovible d'un vilebrequin (1) avec une roue de pompe (5) d'un convertisseur de couple hydrodynamique placé sur le même axe, un rotor (8) d'une machine électrique étant formé sur la roue de pompe (5),
**caractérisée en ce que**
la roue de pompe (5), soutenue solidairement avec le carter de boîte de vitesse par un palier à charge radiale (9), est logée de façon à pouvoir tourner, et le palier à charge radiale (9) est disposé dans un boîtier (10) d'une machine électrique, lequel logement est fixé sur le carter de boîte de vitesse (12).

2. Liaison d'entraînement selon la revendication 1,
**caractérisée en ce que**
la liaison entre la roue de pompe(5) et le vilebrequin (1) est une liaison entre l'arbre et le moyeu pourvue de dentures longitudinales.

3. Liaison d'entraînement selon la revendication 1 ou 2,
**caractérisée en ce que**
la machine électrique peut fonctionner aussi bien en tant que moteur qu'en tant que générateur.

4. Liaison d'entraînement selon l'une des revendications 1 à 3,
**caractérisée en ce que**
le rotor (8) est relié mécaniquement à la roue de pompe (5) ou est formé d'une seule pièce, et le rotor (8) en appui fixe sur le carter de boîte de vitesse est logé de façon à pouvoir tourner au moyen du palier à charge radiale (9).
